Europäisches Patentamt

European Patent Office

Office européen des brevets

(19)

(11) Publication number: **0 318 027 B1**

# EUROPEAN PATENT SPECIFICATION

(45) Date of publication of patent specification: **06.07.94**

(51) Int. Cl.⁵: **C09D 201/04**, C09D 5/46, C09D 5/03

(21) Application number: **88119672.9**

(22) Date of filing: **25.11.88**

(54) Fluororubber-containing powder coating composition.

(30) Priority: **26.11.87 JP 298524/87**

(43) Date of publication of application:
**31.05.89 Bulletin 89/22**

(45) Publication of the grant of the patent:
**06.07.94 Bulletin 94/27**

(84) Designated Contracting States:
**DE FR GB**

(56) References cited:
**EP-A- 0 184 276**

**Kirk-Othmer, Encyclopedia of Chemical Technology, 3rd ed., Vol 19, pages 7-16**

**Encyclopedia of Polymer Science and Engineering, Vol 7, "Fluorocarbon Elastomers".**

(73) Proprietor: **DAIKIN INDUSTRIES, LIMITED Umeda Center Building, 4-12, Nakazaki-nishi 2-chome, Kita-ku Osaka-shi, Osaka-fu(JP)**

(72) Inventor: **Tomihashi, Nobuyuki 20-3, Sakuragaoka Kita-machi Takatsuki-shi Osaka-fu(JP)** Inventor: **Akamatsu, Masafumi 3-7-D-1-405, Shinsenri Minami-machi Toyonaka-shi Osaka-fu(JP)** Inventor: **Ueta, Yutaka 3-32, Seiwadai Nishi 5-chome Kawanishi-shi Hyogo-ken(JP)**

(74) Representative: **Hansen, Bernd, Dr.rer.nat. et al Hoffmann, Eitle & Partner Patentanwälte Postfach 81 04 20 D-81904 München (DE)**

EP 0 318 027 B1

**Description**

BACKGROUND OF THE INVENTION

Field of the Invention

The present invention relates to a fluororubber-containing powder coating composition. More particularly, the present invention relates to a powder coating composition comprising a fluororubber, an adhesion-preventing material and optionally a cross-linking agent.

Description of the Related Art

A lining of a fluororubber on a substrate can be formed by various methods for example by laminating a compounded sheet on the substrate followed by cross-linking, by applying a solution type coating on the substrate and cross-linking the fluororubber or by applying an aqueous emulsion type coating on the substrate and cross-linking the fluororubber. However, each method has its own drawbacks and it is highly desired to improve the lining methods for the formation of the fluororubber lining.

In case of the compounded sheet, the film has an enough thickness but cannot be applied on the substrate having a complicated shape. Although the solution or emulsion type coating can be applied on the substrate having the complicated shape, the formed film cannot be made thick enough.

EP-A-0 184 276 discloses a powdered elastomer composition which comprises a homogeneous blend of powdered elastomer and a powdered uniform pre-dispersion of a particulate filler having an additive sorbed therein. The elastomer may be a vinylidene fluoride-hexafluoropropylene copolymer. The additives which are present include conventional fillers, anti-oxidants, activators, accelerators, cross-linking or vulcanizing agents, colourants, UV stabilizers, plasticizers and processing aids. These include carbon black, graphite, calcium carbonate and titanium dioxide.

SUMMARY OF THE INVENTION

An object of the present invention is to provide a fluororubber-containing coating composition which overcomes the drawbacks of the above described conventional methods for the formation of the fluororubber lining.

According to one aspect of the present invention, there is provided a fluororubber-containing powdery coating composition formed of particles having a size of 10 to 2,000 $\mu$m and an apparent density of at least 0.2 g/cm$^3$, the particles comprising a core including comminuted fluoroelastomer and an adhesion-preventing material applied to the core surface, the fluoroelastomer having a glass transition temperature of not higher than 10°C;

the particle cores being obtainable by mixing a thermoplastic fluoroelastomer or a fluoroelastomer and a cross-linking agent for the fluoroelastomer and optionally a filler and comminuting the mixture.

According to a second aspect, there is provided a method for coating an article with a fluororubber comprising the steps of:

applying to the article a fluororubber-containing powdery coating composition formed of particles having a size of 10 to 2,000 $\mu$m and an apparent density of at least 0.2 g/cm$^3$, the particles comprising a core including comminuted fluoroelastomer and an adhesion-preventing material applied to the core surface, the fluororubber having a glass transition temperature of not higher than 10°C;

the particle cores being obtainable by mixing a thermoplastic fluoroelastomer or a fluoroelastomer and a cross-linking agent for the fluoroelastomer and optionally a filler and comminuting the mixture; and

heating the applied powdery coating composition to effect levelling and optionally to crosslink the fluoroelastomer.

DETAILED DESCRIPTION OF THE INVENTION

A "fluororubber" herein used is intended to mean a fluorine-containing polymer which has a glass transition temperature of not higher than 10°C and rubbery elasticity at room temperature. In the present invention, any of conventionally known fluororubbers may be used.

Specific examples of the fluororubbers are vinylidene fluoride/hexafluoropropylene copolymers, vinylidene fluoride/tetrafluoroethylene/hexafluoropropylene copolymers, vinylidene fluoride/chlorotrifluoroethylene copolymers, tetrafluoroethylene/propylene copolymers, hexafluoropropylene/ethylene copolymers, perfluoro(alkyl vinyl ether) (including those having plural ether linkages)/olefin (e.g. tetrafluoroethylene, ethylene, etc.) copolymers, fluorosilicone pclymers, fluorophosphazene polymers and the like. Some of the fluororubber may have iodine atoms and/or bromine atoms bonded to polymer chains to increase a cross-linking reactivity of the rubber. Such fluororubbers are disclosed in Japanese Patent Kokai Publication No. 125491/1978, U.S. Patent No. 4,243,770, Japanese Patent Publication No. 4115/1978, U.S. Patent No. 4,035,565, Japanese Patent Kokai Publication No. 2031/1984 and U.S. Patent No. 4,501,869.

The fluororubber includes thermoplastic fluororubber. The thermoplastic fluororubber comprises at least one elastomeric polymer segment and at least one non-elastomeric polymer segment, at least one of the polymer segments being a fluorine-containing polymer segment. Preferably, the thermoplastic fluororubber comprises the elastomeric polymer segment(s) and the non-elastomeric polymer segment(s) in a weight ratio of 40:60 to 95:5.

A preferred example of the thermoplastic fluororubber is a fluororubber comprising a polymer chain consisting of two or three polymer segments, an iodine atom bonded to one end of the polymer chain and a residue which has been formed by removing the iodine atom from an iodide compound and is bonded to the other end of the polymer chain, one of which segments (when the polymer chain consists of two segments) or one ore two of which segments (when the polymer chain consists of three segments) is or are one or two elastomeric polymer segments having a molecular weight of 30,000 to 1,200,000 selected from the group consisting of (1) vinylidene fluoride/hexafluoropropylene or pentafluoropropylene/tetrafluoroethylene (molar ratio of 45-90:5-50:0-35) polymer and (2) perfluoro($C_1$-$C_3$-alkyl vinyl ether) (including those having plural ether linkages)/tetrafluoroethylene/vinylidene fluoride (molar ratio of 15-75:0-85:0-85) polymer,

the remaining segment(s) is or are one or two non-elastomeric polymer segments having a molecular weight of 3,000 to 400,000 selected from the group consisting of (3) vinylidene fluoride/tetrafluoroethylene (molar ratio of 0-100:0-100) polymer and (4) ethylene/tetrafluoroethylene/ hexafluoropropylene, 3,3,3-trifluoropropylene-1, 2-trifluoromethyl-3,3,3-trifluoropropylene-1 or perfluoro($C_1$-$C_3$-alkyl vinyl ether) (including those having plural ether linkages) (molar ratio of 40-60:60-40:0-30) polymer,

a weight ratio of the elastomeric polymer segment(s) and the non-elastomeric polymer segment(s) being from 40:60 to 95:5.

The preferred examples of the thermoplastic fluororubber are described in Japanese Patent Publication No. 4728/1983 and U.S. Patent No. 4,158,678.

The coating composition of the present invention may be cross linked by a conventional cross-linking method, such as amine cross-linking, polyol cross-linking, peroxide cross-linking or by irradiation.

When the coating composition of the present invention is cross linked with a polyol or a peroxide, a suitable cross-linking agent is added to the composition.

In case of the amine cross-linking, a primary or secondary polyamine is used as the cross-linking agent.

In case of the polyol cross-linking, a combination of a polyol (e.g. bisphenol-A and bisphenol-AF) and a cross-linking accelerator (e.g. calcium hydroxide, barium hydroxide, guanidine and imidazole) is preferably used.

In case of the peroxide cross-linking, a peroxide having a half-life temperature in a period of 10 hours of 100°C or higher (e.g. dicumyl peroxide, cumyl hydroperoxide and tert.-butyl peroxide) is used. The peroxide is usually used in combination with a polyfunctional compound (e.g. triallyl isocyanurate, triallylene cyanurate and diallyl phthalate).

When the powder coating composition contains the cross-linking agent and its cross-linking rate is too high, a leveling property of a coated film is deteriorated so that coating performance of the composition is decreased. On the contrary, in case of too low cross-linking rate, sagging of the composition is easily formed. Then, the cross-linking agent having an induction time of 5 to 30 minutes at least at 100°C or the cross-linking agent which does not induce cross-linking at a temperature of 100 to 130°C but quickly induces cross-linking when the temperature is increased by 20 to 50°C. From this point, the peroxide cross-linking is most preferred, and the polyol cross-linking and the amine cross-linking are less preferred in this order.

The radiation cross-linking is effected after leveling or on a processed article.

When the thermoplastic fluororubber is used as the fluororubber, no cross-linking is necessary. The thermoplastic fluororubber is heated to a plastic state, coated on a substrate and cooled to form a hardened film.

As the adhesion-preventing material, any of conventional additives such as a plasticizer, a bulk filler, a coloring agent, an acid acceptor and the like may be used.

3

EP 0 318 027 B1

Examples of the plasticizer are calcium stearate, magnesium stearate, dioctyl phthalate, dicresyl phthalate and the like. Examples of the bulk filler are inorganic salts (e.g. barium sulfate and calcium carbonate) and carbonaceous materials (e.g. carbon black and graphite). Examples of the coloring agent are metal oxides such as titanium oxide, iron oxide and molybdenum oxide. Examples of the acid acceptor are magnesium oxide, calcium oxide and lead oxide.

The powder of the coating composition of the present invention has an average particle size of 10 to 2,000 $\mu$m. When the average particle size is larger than 2,000 $\mu$m, the coated film has poor surface conditions (surface smoothness). When it is less than 10 $\mu$m, the content of the adhesion-preventing material increases so that physical properties of the coated film (e.g. rubbery elasticity and chemical resistance) are deteriorated.

In case of the powder coating composition to be used in electrostatic powder coating, the powder has an average particle size of 10 to 150 $\mu$m, preferably 20 to 100 $\mu$m. In case of fluidized bed coating, the powder has an average particle size of 100 to 300 $\mu$m. In case of rotolining or rotomolding, the powder has an average particle size of 150 to 2,000 $\mu$m, preferably 150 to 1,000 $\mu$m.

The average particle size of the powder is determined according to ASTM D-1457 and D-1921-63 as follows:

An amount of the powder is sieved by a ro-tap shaker through a series of piled up sieves having different meshes from each other. From a mesh size and a cumulative remaining percentage which is calculated from a weight of the powder remaining on each sieve, the average particle size is determined by means of a logarithmic normal probability paper.

The powder has an apparent density of at least 0.2 $g/cm^3$. When the apparent density is less than 0.2 $g/cm^3$, deaeration during the formation of the film is difficult, which causes forming. There is no specific upper limit of the apparent density. Generally, it does not exceed 1.48 $g/cm^3$. The apparent density of the powder is measured according to JIS K 6891.

The powder coating composition of the present invention can be prepared by various methods. For example, the fluororubber and optionally the filler and the cross-linking agent are homogeneously mixed by a mixing apparatus such as a calender roll and a kneader and comminuted by a suitable apparatus such as a cutter mill, a jet mill and a hammer mill. The powder can be prepared by comminuting the fluororubber in a solvent which does not solubilize it but swells it. Also, the powder can be prepared by spray drying an aqueous dispersion or a non-aqueous solution of the fluororubber. Alternatively, the powder can be prepared by coagulating the fluororubber from an aqueous dispersion of the fluororubber and separating and fluidization drying the coagulated fluororubber. Preferably, the powder is prepared by freeze pulverization.

The adhesion-preventing material is applied on the comminuted fluororubber by mixing them with a conventional apparatus such as a twin-cylinder mixer and a spiral agitator, a marine propeller stirrer.

The amount of the adhesion-preventing material is from 0.05 to 10 % by weight based on the weight of the fluororubber.

Processing conditions for the powder coating composition of the present invention varies with the application methods. Generally, following conditions are employed:

In case of the electrostatic powder coating, the powder coating composition is electrostatically deposited on a substrate while applying a voltage of 10 to 80 KV, leveled at a temperature of 60 to 130°C and then cross linked at a temperature of 140 to 200°C to form a homogeneous coated film. In case of fluidized bed coating, after the substrate to be coated is pre-heated to a temperature of 100 to 130°C, the powder coating composition is melt coated on the heated substrate followed by leveling and cross-linking as in case of the electrostatic powder coating. In case of the rotolining or rotomolding, the powder coating composition is filled in a mold or a substrate and gradually heated to a cross-linking temperature to effect leveling and cross-linking while rotating the mold or the substrate.

The thickness of the coated film or the molded article which is formed from the powder coating composition of the present invention is usually from 50 $\mu$m to 10 mm. If desired, the film having a thickness of 10 mm or larger may be formed.

Since the applied composition is to be leveled during processing, preferably the fluororubber to be used has a Mooney viscosity $ML_{1+10}$ (measured after one minute holding and then ten minutes rotation) of 200 or less, preferably 150 or less at 100°C. The Mooney viscosity is measured according to JIS K 6300. When the fluororubber has the Mooney viscosity ($ML_{1+10}$) larger than 200, balance between the leveling and the cross-linking is lost when the temperature is raised to effect leveling so that the leveling of the coated composition is deteriorated. In view of the sag problem or storage stability of the coating composition, the fluororubber preferably has the Mooney viscosity $ML_{1+10}$ of 20 or larger at 60°C.

4

Preferably, the powder coating composition of the present invention has an angle of repose of 20 to 60°. The angle of repose is defined as an angle between a horizontal plane and a ridge of piled powder which is formed by dropping an amount, usually about 100 ml of the powder from a height of 5 cm on a sheet of paper. When the angle of repose exceeds 60°, irregularity in the coated film tends to appear. When said angle is less than 20°, too much adhesion-preventing material is trapped by the fluororubber and adversely affect the properties of the coating composition.

Preferred Embodiments of the Invention

The present invention will be explained more in detail by following Examples, in which "parts" and "%" are by weight unless otherwise indicated.

Compounds of the fluororubber used in Examples had following composition:

Compound 1:

| Component | Parts |
|---|---|
| Daiel G-902<br>(Vinylidene fluoride/hexafluoro-<br>propylene/tetrafluoroethylene copolymer<br>manufactured by Daikin Industries, Ltd.) | 100 |
| Medium thermal carbon | 20 |
| Perhexa-2,5-B<br>(Peroxide compound manufactured by<br>Nippon Oil & Fat Co., Ltd.) | 1.5 |
| Triallyl isocyanurate | 4 |

$[ML_{1+10} \ (100°C) = 30]$

Compound 2:

| Component | Parts |
|---|---|
| Daiel G-704<br>(Vinylidene fluoride/hexafluoro-<br>propylene copolymer manufactured by<br>Daikin Industries, Ltd.) | 100 |
| Medium thermal carbon | 20 |
| MgO | 3 |
| Ca(OH)$_2$ | 6 |

$[ML_{1+10} \ (100°C) = 80]$

Compound 3:

| Component | Parts |
|---|---|
| Daiel Perfluor GA-50<br>(A peroxide cross-linking composition of<br>tetrafluoroethylene/perfluoro(alkyl<br>vinyl ether) copolymer manufactured by<br>Daikin Industries, Ltd.) | 100 |

$[ML_{1+10} \ (100°C) = 10]$

Compound 4:

| Component | Parts |
|---|---|
| Tetrafluoroethylene/propylene copolymer (Molar ratio of 55:45) | 100 |
| Medium thermal carbon | 20 |
| Perhexa-2,5-B | 1.5 |
| Triallyl isocyanurate | 4 |

$[ML_{1+10} \ (100°C) = 30]$

### Example 1

The fluororubber composition of Compound 1 was pulverized with a cutter mill at -80°C and the surfaces of powder particles of the pulverized fluororubber composition were coated with 0.5 % of barium sulfate based on the weight of the fluororubber composition. Then, the powder was sieved to obtain a powder composition having an average particle size of 50 $\mu$m and an apparent density of 0.45 g/cm$^3$.

The powder was electrostatically coated on a steel plate (10 mm x 15 mm x 2 mm) at an applied voltage of 40 KV and then heated at 100°C for 15 minutes. The electrostatic powder coating and heating were repeated further two times and the coated steel plate was finally baked in the air at 100°C for 30 minutes and in a nitrogen stream at 160°C for 60 minutes to cure the fluororubber. Thereby, a smooth coated film of about 5 mm in thickness containing no bubbles was formed.

### Example 2

The fluororubber composition of Compound 2 was pulverized and sieved in the same manner as in Example 1 to obtain a powder composition having an average particle size of 40 $\mu$m and an apparent density of 0.42 g/cm$^3$.

The powder was electrostatically coated on a steel plate (10 mm x 15 mm x 2 mm) at an applied voltage of 40 KV and then heated at 120°C for 15 minutes. The electrostatic powder coating and heating were repeated further three times and the coated steel plate was finally baked in the air at 120°C for 30 minutes and in a nitrogen stream at 160°C for 60 minutes to cure the fluororubber. Thereby, a homogeneous coated film of about 4 mm in thickness was formed.

### Example 3

The fluororubber composition of Compound 3 was pulverized and sieved at -120°C in the same manner as in Example 1 to obtain a powder composition having an average particle size of 55 $\mu$m and an apparent density of 0.53 g/cm$^3$.

In the same manner as in Example 1 but changing the leveling temperature to 80°C and using the above powder, a homogeneous coated film of about 5 mm in thickness was formed on the steel plate.

### Example 4

In the same manner as in Example 1 but using the fluororubber composition of Compound 4, the powder having an average particle size of 45 $\mu$m was obtained. From this powder, a homogeneous coated film of about 4.5 mm in thickness was formed on the steel plate.

### Example 5

Among the sieved powder obtained in Example 1, that having the particle size of 100 to 200 $\mu$m and the apparent density of 0.65 g/cm$^3$ was charged in a fluidized bed coating tank and fluidized with air blow.

In the fluidized powder, a steel plate (10 mm x 15 mm x 5 mm) which was preheated at 120°C was dipped for 1 minute. After blowing off excess powder with an air gun, the coated steel plate was baked at 120°C for 10 minutes. The dip coating, blowing off with the air gun and baking were repeated further two times. Finally, the coated composition was leveled at 120°C for 20 minutes and then cured in the nitrogen stream at 160°C for 60 minutes. Thereby, a smooth coated film of about 5.5 mm in thickness containing no bubbles was produced.

Example 6

Among the sieved powder in Example 1, that having the particle size of 200 to 1,000 $\mu$m and the apparent density of 0.90 g/cm$^3$ (1,800 g) was charged in a mold having an interior space of 3 liters the inner wall of which was coated with a silicone type mold release agent and molded in a nitrogen stream while double axially rotating the mold. During molding, the temperature was raised at a rate of 5°C/min. to 180°C and kept at that temperature for 20 minutes followed by cooling. Then, the molded article was removed from the mold to obtain a 3 liter container having a wall thickness of about 10 mm.

Physical properties (tensile strength, elongation, tear strength and hardness) and chemical resistance of the films or the molded article produced in Examples 1-6 were measured.

The chemical resistance was evaluated by measuring a volume increase after dipping the films or the article in each chemical in comparison with the volume before dipping. The volume increase of less than 5 % is marked "O", and that of 10 % or larger is marked "X".

The results are shown in Table.

Table

| Example No. | 1 | 2 | 3 | 4 | 5 | 6 |
|---|---|---|---|---|---|---|
| **Physical properties** | | | | | | |
| Tensile strength (MPa) | 18.5 | 15.0 | 11.0 | 12.0 | 18.0 | 18.5 |
| Elongation (%) | 350 | 290 | 550 | 200 | 360 | 330 |
| Tear strength (KN/m) | 20 | 21 | 18 | 15 | 20 | 19 |
| Hardness | 71 | 71 | 69 | 76 | 71 | 72 |
| **Chemical resistance** | | | | | | |
| Sulfuric acid (90 %) (80°C x 70 hrs) | O | O | O | O | O | O |
| Sodium hydroxide (20 %) (80°C x 70 hrs) | O | O | O | O | O | O |
| Gasoline (40°C x 70 hrs) | O | O | O | x | O | O |
| Methanol (40 °C x 70 hrs) | O | x | O | x | O | O |

Example 7

As a fluororubber powder, the thermoplastic fluororubber Daiel Thermoplastic T-630 (manufactured by Daikin Industries, Ltd., $ML_{1+10}$ = 180) was used and treated with calcium stearate to obtain a powder composition having a particle size of 20 to 100 $\mu$m and an apparent density of 0.47 $g/cm^3$. In the same manner as in Example 1, the obtained powder was electrostatically coated on the steel plate and heated at 200°C repeatedly. Then, the coated film was leveled at 190°C for 20 minutes to obtain a homogeneous film of 3 mm in thickness.

**Claims**

1. A fluororubber-containing powdery coating composition formed of particles having a size of 10 to 2,000 $\mu$m and an apparent density of at least 0.2 g/cm$^3$, the particles comprising a core including comminuted fluoroelastomer and an adhesion-preventing material applied to the core surface, the fluoroelastomer having a glass transition temperature of not higher than 10°C;

the particle cores being obtainable by mixing a thermoplastic fluoroelastomer or a fluoroelastomer and a cross-linking agent for the fluoroelastomer and optionally a filler and comminuting the mixture.

2. A fluororubber-containing powdery coating composition according to claim 1, wherein the mixture is comminuted by freeze pulverization.

3. A fluororubber-containing powdery coating composition according to claim 1, wherein the adhesion-preventing material is at least one selected from the group consisting of a plasticizer, a bulk filler, a coloring agent and an acid acceptor.

4. A fluororubber-containing powdery coating composition according to claim 1, having an average particle size of 10 to 150 $\mu$m for use in electrostatic powder coating.

5. A fluororubber-containing powdery coating composition according to claim 1, having an average particle size of 100 to 300 $\mu$m for use in fluidized bed coating.

6. A fluororubber-containing powdery coating composition according to claim 1, having an average particle size of 150 to 2,000 $\mu$m for use in rotolining or rotomolding.

7. A fluororubber-containing powdery coating composition according to claim 1, wherein the fluororubber has a Mooney viscosity of $ML_{1+10}$ of 200 or less at 100°C.

8. A fluororubber-containing powdery coating composition according to claim 1, wherein the amount of the adhesion-preventing material is 0.05-10% by weight based on the weight of the fluororubber.

9. A fluororubber-containing powdery coating composition according to claim 1, which has an angle of repose of 20 to 60°.

10. A method for coating an article with a fluororubber comprising the steps of:

applying to the article a fluororubber-containing powdery coating composition formed of particles having a size of 10 to 2,000 $\mu$m and an apparent density of at least 0.2 g/cm$^3$, the particles comprising a core including comminuted fluoroelastomer and an adhesion-preventing material applied to the core surface, the fluororubber having a glass transition temperature of not higher than 10°C;

the particle cores being obtainable by mixing a thermoplastic fluoroelastomer or a fluoroelastomer and a cross-linking agent for the fluoroelastomer and optionally a filler and comminuting the mixture; and

heating the applied powdery coating composition to effect levelling and optionally to crosslink the fluoroelastomer.

11. A method according to claim 10, wherein the adhesion-preventing material is selected from a plasticizer, a bulk filler, a coloring agent or an acid acceptor.

12. A method according to claim 11, wherein the adhesion-preventing material is a plasticizer selected from calcium stearate, magnesium stearate, dioctyl phthalate or dicresyl phthalate.

13. A method according to claim 11, wherein the adhesion-preventing material is a bulk filler selected from an inorganic salt or a carbonaceous material.

14. A method according to claim 11, wherein the adhesion-preventing material is a bulk filler selected from barium sulfate, calcium carbonate, carbon black or graphite.

10

**15.** A method according to claim 11, wherein the adhesion-preventing material is a metal oxide coloring agent.

**16.** A method according to claim 11, wherein the adhesion-preventing material is a coloring agent selected from titanium oxide, iron oxide or molybdenum oxide.

**17.** A method according to claim 11, wherein the adhesion-preventing material is an acid acceptor selected from magnesium oxide, calcium oxide or lead oxide.

**18.** A method according to claim 10, wherein the composition has an angle of repose of 20 to 60°.

**19.** A fluororubber-containing powdery composition formed of particles having a size of 10 to 2,000 $\mu$m and an apparent density of at least 0.2 g/cm$^3$, the particles comprising a core including comminuted fluoroelastomer and an adhesion-preventing material applied to the core surface, the fluoroelastomer having a glass transition temperature of not higher than 10°C;
the particle cores being obtainable by mixing a thermoplastic fluoroelastomer or a fluoroelastomer and a cross-linking agent for the fluoroelastomer and optionally a filler and comminuting the mixture.

**20.** A fluororubber-containing powdery composition according to claim 19, wherein the mixture is comminuted by freeze pulverization.

**21.** A fluororubber-containing powdery composition according to claim 19, wherein the adhesion-preventing material is at least one selected from the group consisting of a plasticizer, a bulk filler, a coloring agent and an acid acceptor.

**22.** A fluororubber-containing powdery composition according to claim 19, having an average particle size of 10 to 150 $\mu$m for use in electrostatic powder coating.

**23.** A fluororubber-containing powdery composition according to claim 19, having an average particle size of 100 to 300 $\mu$m for use in fluidized bed coating.

**24.** A fluororubber-containing powdery composition according to claim 19, having an average particle size of 150 to 2,000 $\mu$m for use in rotolining or rotomolding.

**25.** A fluororubber-containing powdery composition according to claim 19, wherein the fluororubber has a Mooney viscosity of $ML_{1+10}$ of 200 or less at 100°C.

**26.** A fluororubber-containing powdery composition according to claim 19, wherein the amount of the adhesion-preventing material is 0.05-10% by weight based on the weight of the fluororubber.

**27.** A fluororubber-containing powdery composition according to claim 19, which has an angle of repose of 20 to 60°.

**Patentansprüche**

**1.** Fluorkautschuk-haltige pulverförmige Beschichtungszusammensetzung, gebildet aus Partikeln mit einer Größe von 10 bis 2000 $\mu$m und einer Fülldichte von mindestens 0,2 g/cm$^3$, wobei die Partikel einen Kern umfassen, der ein zerkleinertes Fluorelastomer einschließt, und wobei auf die Kernoberfläche ein adhäsionsverhinderndes Material aufgebracht ist, und wobei das Fluorelastomer eine Glasübergangstemperatur von nicht mehr als 10°C hat;
wobei die Partikelkerne erhältlich sind durch Mischen eines thermoplastischen Fluorelastomers oder eines Fluorelastomers und eines Vernetzungsmittels für das Fluorelastomer und gegebenenfalls eines Füllstoffs und Zerkleinern der Mischung.

**2.** Fluorkautschuk-haltige Pulver-Überzugszusammensetzung gemäß Anspruch 1, dadurch **gekennzeichnet,** daß die Mischung durch Gefrierpulverisierung zerkleinert wird.

3. Fluorkautschuk-haltige pulverförmige Beschichtungszusammensetzung gemäß Anspruch 1, bei der das adhäsionsverhindernde Material mindestens ein Stoff, ausgewählt aus der Gruppe bestehend aus einem Weichmacher, einem Bulk-Füllstoff, einem Farbstoff und einem Säureakzeptor, ist.

4. Fluorkautschuk-haltige pulverförmige Beschichtungszusammensetzung gemäß Anspruch 1 mit einer durchschnittlichen Partikelgröße von 10 bis 150 $\mu$m zur Verwendung bei der elektrostatischen Pulverbeschichtung.

5. Fluorkautschuk-haltige pulverförmige Beschichtungszusammensetzung gemäß Anspruch 1 mit einer durchschnittlichen Partikelgröße von 100 bis 300 $\mu$m zur Verwendung bei der Wirbelbettbeschichtung.

6. Fluorkautschuk-haltige pulverförmige Beschichtungszusammensetzung gemäß Anspruch 1 mit einer mittleren Partikelgröße von 150 bis 2000 $\mu$m zur Verwendung bei der Rotationsbeschichtung oder Rotationsformung.

7. Fluorkautschuk-haltige pulverförmige Beschichtungszusammensetzung gemäß Anspruch 1, dadurch **gekennzeichnet,** daß der Fluorkautschuk eine Mooney-Viskosität von $ML_{1+10}$ von 200 oder weniger bei 100°C hat.

8. Fluorkautschuk-haltige pulverförmige Beschichtungszusammensetzung gemäß Anspruch 1, in der die Menge des adhäsionsverhindernden Materials 0,05 bis 10 Gew.-%, bezogen auf das Gewicht des Fluorkautschuks, beträgt.

9. Fluorkautschuk-haltige pulverförmige Beschichtungszusammensetzung gemäß Anspruch 1, die einen Schüttwinkel von 20 bis 60° hat.

10. Verfahren zur Beschichtung eines Gegenstands mit einem Fluorkautschuk, umfassend die folgenden Schritte:
Aufbringen einer Fluorkautschuk-haltigen pulverförmigen Beschichtungszusammensetzung, gebildet aus Partikeln mit einer Größe von 10 bis 2000 $\mu$m und einer Fülldichte von mindestens 0,2 g/cm$^3$, wobei die Partikel einen Kern, der ein zerkleinertes Fluorelastomer einschließt, umfassen und ein adhäsionsverhinderndes Material auf die Kernoberfläche aufgebracht ist, und wobei der Fluorkautschuk eine Glasübergangstemperatur von nicht mehr als 10°C hat;
wobei die Partikelkerne erhältlich sind durch Mischen eines thermoplastischen Fluorelastomers oder eines Fluorelastomers und eines Vernetzungsmittels für das Fluorelastomer und gegebenenfalls eines Füllstoffs und Zerkleinern der Mischung, auf den Gegenstand; und
Erhitzen der aufgebrachten pulverförmigen Beschichtungszusammensetzung, um sie zum Verlaufen zu bringen und gegebenenfalls das Fluorelastomer zu vernetzen.

11. Verfahren gemäß Anspruch 10, dadurch **gekennzeichnet,** daß das adhäsionsverhindernde Material ausgewählt ist aus einem Weichmacher, einem Bulk-Füllstoff, einem Färbemittel oder einem Säureakzeptor.

12. Verfahren gemäß Anspruch 11, dadurch **gekennzeichnet,** daß der adhäsionsverhindernde Stoff ein Weichmacher, ausgewählt aus Calciumstearat, Magnesiumstearat, Dioctylphthalat oder Dicresylphthalat ist.

13. Verfahren gemäß Anspruch 11, dadurch **gekennzeichnet,** daß das adhäsionsverhindernde Material ein Bulk-Füllstoff ist, der aus einem anorganischen Salz oder einem kohlenstoffhaltigen Material ausgewählt wird.

14. Verfahren gemäß Anspruch 11, dadurch **gekennzeichnet,** daß das adhäsionsverhindernde Material ein Bulk-Füllstoff, ausgewählt aus Bariumsulfat, Calciumcarbonat, Ruß oder Graphit, ist.

15. Verfahren gemäß Anspruch 11, dadurch **gekennzeichnet,** daß das adhäsionsverhindernde Material ein Metalloxid-Färbemittel ist.

16. Verfahren gemäß Anspruch 11, dadurch **gekennzeichnet,** daß das adhäsionsverhindernde Material ein Färbemittel, ausgewählt aus Titanoxid, Eisenoxid oder Molybdänoxid, ist.

17. Verfahren gemäß Anspruch 11, dadurch **gekennzeichnet,** daß das adhäsionsverhindernde Material ein Säureakzeptor, ausgewählt aus Magnesiumoxid, Calciumoxid oder Bleioxid, ist.

18. Verfahren gemäß Anspruch 10, dadurch **gekennzeichnet,** daß die Zusammensetzung einen Schüttwinkel von 20 bis 60° hat.

19. Fluorkautschuk-haltige pulverförmige Zusammensetzung, gebildet aus Partikeln mit einer Größe von 10 bis 2000 $\mu$m und einer Fülldichte von mindestens 0,2 g/cm$^3$, wobei die Partikel einen Kern umfassen, der ein zerkleinertes Fluorelastomer einschließt, und wobei auf die Kernoberfläche ein adhäsionsverhinderndes Material aufgebracht ist, und wobei das Fluorelastomer eine Glasübergangstemperatur von nicht mehr als 10°C hat;
wobei die Partikelkerne erhältlich sind durch Mischen eines thermoplastischen Fluorelastomers oder eines Fluorelastomers und eines Vernetzungsmittels für das Fluorelastomer und gegebenenfalls eines Füllstoffs und Zerkleinern der Mischung.

20. Fluorkautschuk-haltige pulverförmige Zusammensetzung gemäß Anspruch 19, dadurch **gekennzeichnet,** daß die Mischung durch Gefrierpulverisierung zerkleinert wird.

21. Fluorkautschuk-haltige pulverförmige Zusammensetzung gemäß Anspruch 19, dadurch **gekennzeichnet,** daß das adhäsionsverhindernde Material mindestens ein Stoff ist, der ausgewählt ist aus der Gruppe bestehend aus einem Weichmacher, einem Bulk-Füllstoff, einem Färbemittel und einem Säureakzeptor.

22. Fluorkautschuk-haltige pulverförmige Zusammensetzung gemäß Anspruch 19, mit einer mittleren Partikelgröße von 10 bis 150 $\mu$m zur Verwendung bei der elektrostatischen Pulverbeschichtung.

23. Fluorkautschuk-haltige pulverförmige Zusammensetzung gemäß Anspruch 19 mit einer durchschnittlichen Partikelgröße von 100 bis 300 $\mu$m zur Verwendung der Wirbelbettbeschichtung.

24. Fluorkautschuk-haltige pulverförmige Zusammensetzung gemäß Anspruch 19 mit einer mittleren Partikelgröße von 150 bis 2000 $\mu$m zur Verwendung bei der Rotationsbeschichtung oder Rotationsformung.

25. Fluorkautschuk-haltige pulverförmige Zusammensetzung gemäß Anspruch 19, dadurch **gekennzeichnet,** daß der Fluorkautschuk eine Mooney-Viskosität von $ML_{1+10}$ von 200 oder weniger bei 100°C hat.

26. Fluorkautschuk-haltige pulverförmige Zusammensetzung gemäß Anspruch 19, bei der die Menge des adhäsionsverhindernden Stoffs 0,05 bis 10 Gew.-%, bezogen auf das Gewicht des Fluorkautschuks, beträgt.

27. Fluorkautschuk-haltige pulverförmige Zusammensetzung gemäß Anspruch 19, die einen Schüttwinkel von 20 bis 60° hat.

**Revendications**

1. Composition pulvérulente de revêtement contenant du caoutchouc fluoré, formée de particules ayant une taille de 10 à 2000 $\mu$m et une masse volumique apparente d'au moins 0,2 g/cm$^3$, les particules comprenant un noyau incluant du fluoroélastomère fragmenté et une matière empêchant l'adhérence et qui est appliquée à la surface du noyau, l'élastomère fluoré ayant une température de transition vitreuse non supérieure à 10°C;
les noyaux des particules pouvant être obtenus par mélangeage d'un élastomère fluoré thermoplastique ou d'un élastomère fluoré et d'un agent de réticulation de ce fluoroélastomère et, éventuellement, d'une charge et par fragmentation du mélange.

2. Composition pulvérulente de revêtement contenant du caoutchouc fluoré selon la revendication 1, dans laquelle le mélange est fragmenté par lyophilisation ou pulvérisation à froid.

**3.** Composition pulvérulente de revêtement contenant du caoutchouc fluoré, selon la revendication 1, dans laquelle la matière évitant une adhérence est formée d'au moins une matière choisie dans l'ensemble consistant en un plastifiant, une charge volumineuse, un agent de coloration et un accepteur d'acide.

**4.** Composition pulvérulente de revêtement contenant du caoutchouc fluoré, selon la revendication 1, ayant une taille particulaire moyenne de 10 à 150 $\mu$m, destinée à servir dans un revêtement électrostatique de poudre.

**5.** Composition pulvérulente de revêtement, contenant du caoutchouc fluoré, selon la revendication 1, ayant une taille particulaire moyenne de 100 à 300 $\mu$m, destinée à servir dans du revêtement en lit fluidisé.

**6.** Composition pulvérulente de revêtement contenant du caoutchouc fluoré, selon la revendication 1, ayant une taille particulaire moyenne de 150 à 2000 $\mu$m, destinée à servir dans du revêtement de chemisage centrifuge ou dans du moulage centrifuge.

**7.** Composition pulvérulente de revêtement contenant du caoutchouc fluoré, selon la revendication 1, dans laquelle le caoutchouc fluoré a un indice consistométrique Mooney $ML_{1+10}$ égal ou inférieur à 200 à 100°C.

**8.** Composition pulvérulente de revêtement contenant du caoutchouc fluoré, selon la revendication 1, dans laquelle la quantité de la matière évitant de l'adhérence est de 0,05 à 10 % en poids, sur la base du poids du caoutchouc fluoré.

**9.** Composition pulvérulente de revêtement, contenant du caoutchouc fluoré, selon la revendication 1, qui a un angle de repos de 20 à 60°.

**10.** Procédé pour revêtir un article avec du caoutchouc fluoré, ce procédé comprenant les étapes consistant à :

appliquer sur l'article une composition pulvérulente de revêtement, contenant du caoutchouc fluoré et formée de particules ayant une taille de 10 à 2000 $\mu$m et ayant une masse volumique apparente valant au moins 0,2 g/cm$^3$, les particules comprenant un noyau comportant du fluoroélastomère fragmenté et une matière évitant l'adhérence et qui est appliquée à la surface du noyau, le caoutchouc fluoré ayant une température de transition vitreuse non supérieure à 10°C;

les noyaux des particules pouvant être obtenus par mélangeage d'un fluoroélastomère thermoplastique ou d'un fluoroélastomère et d'un agent de réticulation de fluoroélastomère et éventuellement d'une charge et fragmentation du mélange, et

chauffage de la composition pulvérulente de revêtement, ainsi appliquée, pour effectuer un nivellement et éventuellement pour réticuler l'élastomère fluoré.

**11.** Procédé selon la revendication 10, dans lequel la matière évitant de l'adhérence est choisie parmi un plastifiant, une charge volumineuse, un agent colorant ou un accepteur d'acide.

**12.** Procédé selon la revendication 11, dans lequel la matière évitant de l'adhérence est un plastifiant choisi parmi le stéarate de calcium, le stéarate de magnésium, le phtalate de dioctyle ou le phtalate de dicrésyle.

**13.** Procédé selon la revendication 11, dans lequel la matière évitant de l'adhérence est une charge volumineuse choisie parmi un sel minéral ou une matière carbonée.

**14.** Procédé selon la revendication 11, dans lequel la matière évitant de l'adhérence est une charge volumineuse choisie parmi du sulfate de baryum, du carbonate de calcium, du noir de carbone ou du graphite.

**15.** Procédé selon la revendication 11, dans lequel la matière évitant de l'adhérence est un agent colorant à base d'oxyde de métal.

**16.** Procédé selon la revendication 11, dans lequel la matière évitant de l'adhérence est un agent colorant choisi parmi de l'oxyde de titane, de l'oxyde de fer ou de l'oxyde de molybdène.

**17.** Procédé selon la revendication 11, dans lequel la matière évitant de l'adhérence est un accepteur d'acide choisi parmi l'oxyde de magnésium, l'oxyde de calcium ou l'oxyde de plomb.

**18.** Procédé selon la revendication 10, dans lequel la composition a un angle de repos de 20 à 60°.

**19.** Composition pulvérulente contenant du caoutchouc fluoré, formée de particules ayant une taille de 10 à 2000 $\mu$m et ayant une masse volumique apparente valant au moins 0,2 g/cm$^3$, les particules comprenant un noyau comportant de l'élastomère fluoré fragmenté et une matière empêchant l'adhérence et qui est appliquée à la surface des noyaux, l'élastomère fluoré ayant une température de transition vitreuse non supérieure à 10°C;
les noyaux des particules pouvant être obtenus par mélangeage d'un élastomère fluoré thermoplastique ou d'un élastomère fluoré et d'un agent de réticulation de cet élastomère fluoré et, éventuellement, d'une charge et fragmentation du mélange.

**20.** Composition pulvérulente contenant du caoutchouc fluoré, selon la revendication 19, dans laquelle le mélange est fragmenté par lyophilisation.

**21.** Composition pulvérulente contenant du caoutchouc fluoré, selon la revendication 19, dans laquelle la matière évitant de l'adhérence est au moins une matière choisie dans l'ensemble consistant en un plastifiant, une charge volumineuse, un agent colorant et un accepteur d'acide.

**22.** Composition pulvérulente contenant du caoutchouc fluoré, selon la revendication 19, ayant une taille particulaire moyenne de 10 à 150 $\mu$m, destinée à servir à du revêtement électrostatique de poudre.

**23.** Composition pulvérulente contenant du caoutchouc fluoré, selon la revendication 19, ayant une taille particulaire moyenne de 100 à 300 $\mu$m, destinée à servir à du revêtement en lit fluidisé.

**24.** Composition pulvérulente contenant du caoutchouc fluoré, selon la revendication 19, ayant une taille particulaire moyenne de 150 à 200 $\mu$m, destinée à servir à du chemisage centrifuge ou à du moulage centrifuge.

**25.** Composition pulvérulente contenant du caoutchouc fluoré, selon la revendication 19, dans laquelle le caoutchouc fluoré a, à 100°C, un indice consistométrique Mooney $ML_{1+10}$ égal ou inférieur à 200.

**26.** Composition pulvérulente contenant du caoutchouc fluoré, selon la revendication 19, dans lequel la quantité de la matière évitant de l'adhérence est de 0,05 à 10 % en poids, sur la base du poids du caoutchouc fluoré.

**27.** Composition pulvérulente contenant du caoutchouc fluoré, selon la revendication 19, qui présente un angle de repos de 20 à 60°.